# EUROPÄISCHE PATENTANMELDUNG

(11) **EP 1 093 941 A2**
(43) Veröffentlichungstag der Anmeldung: **25.04.2001**
(21) Anmeldenummer: 00122803.0
(22) Anmeldetag: 19.10.2000
(51) Int. Cl.: B60C 23/00

(54) **Gerät zum Entlüften und/oder Befüllen von Reifen**

(30) Priorität: 20.10.1999 US 421564
(71) Anmelder: Tigges, Betram, 41468 Neuss (DE)
(72) Erfinder: Tigges, Betram, 41468 Neuss (DE)
(74) Vertreter: Paul, Dieter-Alfred, Dipl.-Ing.

(57) **Zusammenfassung**

Die Erfindung bezieht sich auf ein Gerät (1) zum Entlüften und/oder Befüllen von Reifen (42-49) an insbesondere geländegängigen Fahrzeugen mit einer Regeleinrichtung (2), die einen an eine Druckluftquelle (65) anschließbaren Lufteingang (6) und wenigstens einen Luftausgang (8, 9) aufweist, der über Luftdruckleitungen (10, 11, 16, 17, 18-25) verbindbar ist, wobei die Regeleinrichtung (2) ein Regelorgan (67) aufweist, über das ein bestimmter Arbeitsdruck in den Luftdruckleitungen (10, 11, 16, 17, 18-25) nach Anschluß an den Reifen (42-49) einregelbar ist, wobei das Regelorgan (67) mit einer handbetätigbaren Einstelleinrichtung (57) verbunden ist, über die unterschiedliche Arbeitsdrücke einstellbar sind. Das erfindungsgemäße Gerät ist dadurch gekennzeichnet, daß die Einstelleinrichtung (57) wenigstens zwei handbetätigbare Schaltorgane (59, 60, 61) oder ein Stufenschaltorgan (88) aufweist, durch deren bzw dessen Betätigung das Regelorgan (67) jeweils auf einen dem Schaltorgan (59, 60, 61) zugeordneten Arbeitsdruck einstellbar ist.

## Beschreibung

Die Erfindung betrifft ein Gerät zum Entlüften und/oder Befüllen von Reifen an insbesondere geländegängigen Fahrzeugen mit einer Regeleinrichtung, die einen an eine Druckluftquelle anschließbaren Lufteingang und einen Luftausgang aufweist, der über Luftdruckleitungen mit den Reifen verbindbar ist, wobei die Regeleinrichtung ein Regelorgan aufweist, über das ein bestimmter Arbeitsdruck in den Luftdruckleitungen nach Anschluß an den Reifen einregelbar ist, wobei das Regelorgan mit einer handbetätigbaren Einstelleinrichtung verbunden ist, über die unterschiedliche Arbeitsdrücke einstellbar sind.

Ein solches Gerät ist in dem DE-GM 91 09 984.6 beschrieben. Das Gerät wird dazu eingesetzt, um insbesondere an geländegängigen Fahrzeugen den Reifendruck an die jeweiligen Bodengegebenheiten anzupassen. So benötigen die Reifen solcher Fahrzeuge auf befestigten Straßen einen hohen Druck, damit sie sich bei Geschwindigkeiten im Bereich der Maximalgeschwindigkeit nicht zu stark erwärmen und eine gute Straßenlage gewährleistet ist. Auf unbefestigten Straßen und erst recht im Gelände, wo langsam gefahren wird, sind niedrigere Reifendrücke von Vorteil, da hierdurch die Traktion verbessert wird und das Entstehen tiefer Fahrspuren und hohe Bodenverdichtung vermieden werden.

Das vorgenannte Gerät weist eine Regeleinrichtung auf, die einen Lufteingang hat, welcher an eine Druckluftquelle anschließbar ist. Solche Druckluftquellen sind in der Regel bei großen geländegängigen Fahrzeugen ohnehin vorhanden, um andere Einrichtungen, wie z. B. Bremsen, zu betätigen. Die Regeleinrichtung hat einen Luftausgang, der mit einer Druckluftleitung verbindbar ist, welche nach Verzweigung an die Ventile der Reifen anschließbar sind. Die verzweigten Druckluftleitungen werden jeweils in Aufnahmebehältnissen in der Nähe der Reifen vorgehalten und können für den Befüll- bzw. Entleervorgang bei stehendem Fahrzeug herausgezogen und an die Ventile angeschlossen werden.

Die Regeleinrichtung weist ein Regelorgan in Form eines Proportionalventils auf, über das ein bestimmter Arbeitsdruck am Luftausgang einstellbar ist, wenn die Druckluftleitungen an die Ventile der Reifen angeschlossen sind. Über eine pneumatische Einstelleinrichtung können verschiedene Arbeitsdrücke eingestellt werden, um den Reifendruck an unterschiedliche Fahrbahnbeschaffenheiten anzupassen. Die Einstelleinrichtung weist hierzu Druckventile auf, die Verbindung zur Druckluftquelle haben und über das ein bestimmter Steuerdruck auf das Proportionalventil gegeben werden kann. Der Steuerdruck steht in einem bestimmten Verhältnis zum Arbeitsdruck, d. h. der Arbeitsdruck wird durch das Proportionalventil entsprechend dem auf es einwirkenden Steuerdrucks eingeregelt. Über ein von außen zu betätigendes Einstellorgan kann der Steuerdruck und damit der Arbeitsdruck auf verschiedene Werte eingestellt werden. Das Einstellorgan ist an der Außenseite des Gehäuses der Regeleinrichtung angeordnet.

Obwohl das vorbekannte Gerät zuverlässig arbeitet, ist es bei der Bedienung des Geräts zu Einstellfehlern gekommen. Es hat sich gezeigt, daß trotz Bedienungsanleitung und Beschriftung des Einstellorgans immer wieder falsche Reifendrücke eingestellt werden, was auf der Straße zu hohem Reifenverschleiß bis hin zum Platzen von Reifen führt und im Gelände eine schlechte Traktion und hohe Bodenverdichtung erzeugen kann.

Der Erfindung liegt deshalb die Aufgabe zugrunde, ein Gerät der eingangs genannten Art so zu gestalten, daß der für die jeweilige Bodengegebenheit optimale Reifendruck zuverlässiger eingestellt wird.

Diese Aufgabe wird erfindungsgemäß dadurch gelöst, daß die Einstelleinrichtung wenigstens zwei, vorzugsweise drei bis sechs handbetätigbare Schaltorgane oder ein Stufenschaltorgan mit wenigstens zwei, vorzugsweise drei bis sechs Schaltstellungen aufweist, durch deren bzw. dessen Betätigung das Regelorgan jeweils auf eine dem Schaltorgan zugeordneten Arbeitsdruck einstellbar ist. Grundgedanke der Erfindung ist es also, der Bedienungsperson für jeden Arbeitsdruck ein besonderes Schaltorgan bereitzustellen, so daß die Bedienungsperson den jeweils gewünschten Arbeitsdruck und damit Reifendruck durch einfache Betätigung des dafür vorgesehenen Schaltorgans einstellen kann. Beiden Lösungen liegt die Überlegung zugrunde, daß für die Anpassung an die verschiedenen Bodengegebenheiten in der Regel nur wenige unterschiedliche Arbeitsdrücke erforderlich sind. Im Normalfall wird man mit drei verschiedenen Arbeitsdrücken und folglich mit drei Schaltorganen bzw. drei Schaltstellungen des Stufenschaltorgans für jeden Arbeitsdruck auskommen, um die Reifen an die unterschiedliche Bodenbedingungen anzupassen.

Die Bedienung hat sich als sehr viel zuverlässiger erwiesen, denn es ist nunmehr ausreichend, daß eines der Einstellorgane bzw. das Stufenschaltorgan kurz betätigt wird. Die Schaltorgane können als einfache Zweipunkt-Schalter ausgebildet sein, beispielsweise als Druck-, Dreh- oder Kippschalter, während für das Stufenschaltorgan ein Dreh- oder Schiebeschalter in Frage kommt. Durch entsprechende Beschriftung und/oder Farbgebung kann sichergestellt werden, daß die Bedienungsperson dasjenige Einstellorgan betätigt bzw. das Stufenschaltorgan in eine solche Schaltstellung bringt, das bzw. die einen den jeweiligen Bodenbedingungen entsprechenden Arbeitsdruck bewirkt.

Das Stufenschaltorgan kann mit elektropneumatisch betätigten Ventilen verbunden sein. Eine besonders einfache Ausführungsform ergibt sich jedoch, wenn das Stufenschaltorgan direkt mit einem Mehrwegeventil gekoppelt ist.

Die Schaltorgane bzw. das Stufenschaltorgan können an der Regeleinrichtung selbst angeordnet sein. Da diese vornehmlich in der Fahrzeugmitte angeordnet wird, um kurze Druckluftleitungen zu den Reifen zu gewährleisten, ist die Regeleinrichtung häufig nicht gut zugänglich und unterliegt zudem auch verstärkt Umwelteinflüssen wie Schmutz etc. Es hat sich deshalb als zweckmäßig erwiesen, die Schaltorgane bzw. das Stufenschaltorgan an einer von der Regeleinrichtung getrennten Einstelleinheit anzuordnen, die über pneumatische oder elektrische Steuerleitungen mit der Regeleinrichtung verbunden ist und somit an einem beliebigen Ort des Fahrzeugs angebracht werden kann. Hierfür kommt insbesondere die Fahrerkabine in Frage, da die Einstelleinheit dort gut geschützt und bequem zu bedienen ist. Selbstverständlich können auch mehrere identische und getrennte Sätze von Schaltorganen bzw. mehrere Stufenschaltorgane parallel vorhanden sein.

In weiterer Ausgestaltung der Erfindung ist vorgesehen, daß ein Einstellelement vorhanden ist, über das ein Arbeitsdruck Null einstellbar ist. Hierbei handelt es sich um ein Schaltorgan, das als Ein/Aus-Schalter ausgebildet sein kann. In der Stellung 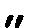 Aus" entlüftet das Regelorgan automatisch die Druckluftleitungen, so daß eine Schnellentleerung der Reifen vorgenommen werden kann, um in möglichst kurzer Zeit beispielsweise von dem hohen Druck für den Straßenbetrieb auf den wesentlich niedrigeren Druck für den Geländeeinsatz zu kommen. Durch Einschalten des Einstellelements und Betätigung des für den Geländeeinsatz vorgesehenen Schaltorgans bzw. Einstellen der zugehörigen Schaltstellung am Stufenschaltorgan wird dann der Druck genau auf den vorgesehenen Wert eingeregelt.

Nach einem weiteren Merkmal der Erfindung ist vorgesehen, daß das Regelorgan pneumatisch einstellbar ist und die Einstelleinrichtung eine pneumatische Schaltung aufweist, in der jedem Schaltorgan bzw. jeder Schaltstellung ein pneumatisches Druckregelventil zur Regelung eines bestimmten Steuerdrucks für das Regelorgan zugeordnet ist und die Druckregelventile mit einem Luftdruckspeicher verbunden sind. Als Druckregelventile kommen Präzisionsventile in Frage, über die der jeweilige Steuerdruck und damit auch der Arbeitsdruck am Ausgang der Regeleinrichtung sehr genau eingestellt werden kann. Damit der Luftdruckspeicher einen möglichst konstanten Druck aufweist, sollte er gegenüber der Luftdruckquelle über ein Rückschlagventil gesichert sein. Zweckmäßig ist es, jedem Druckregelventil ein Schaltventil zuzuordnen und die Schaltventile mit den Schaltorganen bzw. dem Stufenschaltorgan zu verbinden.

Das Regelventil ist in der Regeleinheit vorteilhafterweise als Proportionalventil ausgebildet. Ihm sollte ein eigener Druckspeicher zugeordnet sein.

Schließlich ist nach der Erfindung vorgesehen, daß die den Schaltorganen bzw. Schaltstellungen des Stufenschaltorgans zugeordneten Arbeitsdrücke einstellbar sind. Dies sollte aber nur in der Weise möglich sein, daß die Bedienungspersonen die Einstellung nicht ohne Weiteres vornehmen können. Die Einstellung sollte nur in einer Werkstatt von dazu authorisierten Personen durchgeführt werden können, damit es bei der Druckluftänderung in Anpassung an andere Bodenverhältnisse nicht zu Fehleinstellungen kommt.

In der Zeichnung ist die Erfindung anhand eines Ausführungsbeispiels näher veranschaulicht. Es zeigen:
- Figur 1: eine schematische Darstellung des erfindungsgemäßen Geräts mit Regeleinrichtung;
- Figur 2: ein elektropneumatisches Schaltbild der Regeleinrichtung des Geräts gemäß Figur 1 und
- Figur 3: ein pneumatisches Schaltbild der Regeleinrichtung eines gegenüber den Figuren 1 und 2 abgewandelten Gerätes

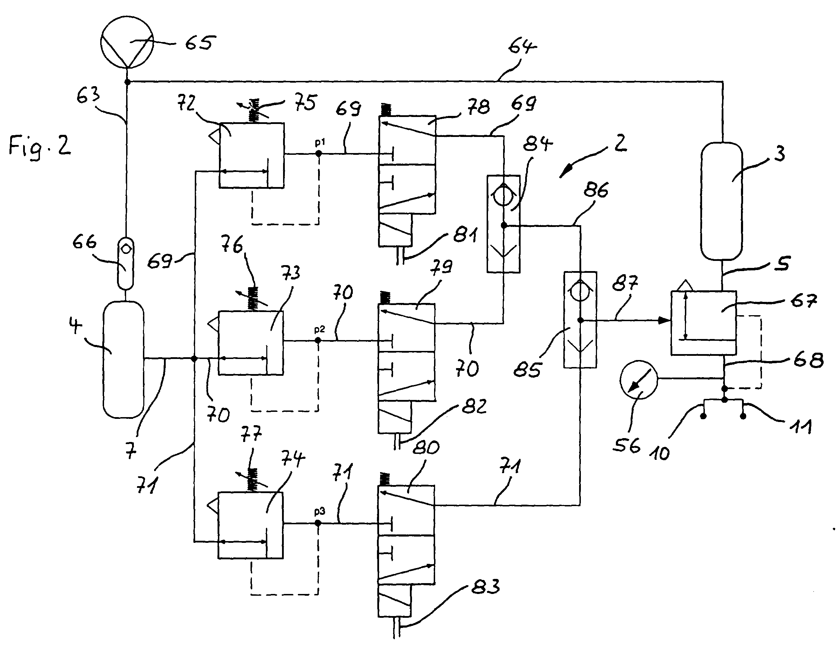

Das insgesamt mit 1 bezeichnete Gerät zum Entlüften und/oder Befüllen von Reifen weist als zentrale Einheit eine Regeleinrichtung 2 auf. Der Regeleinrichtung 2 zugeordnet sind ein Arbeitsdruckspeicher 3 und ein Steuerdruckspeicher 4, die von einem erst in Figur 2 dargestellten Kompressor gespeist werden. Von dem Arbeitsdruckspeicher 3 führt eine Arbeitsdruckleitung 5 zum Steuerdruckspeicher 4 eine Steuerdruckleitung 7 ebenfalls zu der Regeleinrichtung 2 führt.

Die Regeleinrichtung 2 hat zwei Luftausgänge 8, 9, an die sich jeweils Luftdruckleitungen 10, 11 aus Polyamid anschließen. Diese sind wie die Regeleinrichtung 2 in einem Fahrzeug derart fest verlegt, daß sie jeweils an einer Längsseite des Fahrzeugs enden. Hier weisen sie Schnellkupplungen 12, 13 auf. An diese Schnellkupplungen 12, 13 sind über passende Anschlußstücke 14, 15 flexible Luftdruckleitungen 16, 17 anschließbar, welche in diesem Fall jeweils in vier Abzweigungen 18, 19, 20, 21 bzw. 22, 23, 24, 25 auslaufen. An ihren freien Enden weisen die Abzweigleitungen 18-25 Kupplungsstücke 26-33 auf, die zu Ventilen 34-41 an Reifen 42-49 passen. Die Ventile 34-41 können mit den Kupplungsstücken 26-33 verbunden werden, wobei die Ventile 34-41 geöffnet werden. In der unteren Luftdruckleitung 17 befinden sich ein Absperrventil 50 und davon ventilseitig ein Manometer 51. Aufgrund dieser Anordnung können die Reifen 42-45 mit einem anderen Druck versehen werden als die Reifen 46-49. Auch die obere Luftdruckleitung 16 kann mit einem Absperrventil und einem Manometer in der gleichen Anordnung versehen sein.

Die Regeleinrichtung 2 weist an ihrer Außenseite 3 Einstellknöpfe 53, 54, 55 auf, über die drei verschiedene Steuerdrücke einstellbar sind. Der jeweils eingestellte Steuerdruck bestimmt den Luftdruck in den Reifen 42-49. Dabei ist eine Kontrolle über ein zusätzliches Manometer 56 möglich.

Es ist ferner eine Einstelleinheit 57 vorhanden, die mit der Regeleinrichtung 2 über ein elektrisches Steuerkabel 58 verbunden ist. Die Einstelleinheit 57 bildet eine Art Fernbedienung und kann an beliebiger Stelle des Fahrzeugs, beispielsweise in der Fahrerkabine, angeordnet werden. Die Einstelleinheit 57 hat drei Betätigungsknöpfe 59, 60, 61, über die jeweils einer der drei voreingestellten Arbeitsdrücke schaltbar ist. Zusätzlich weist die Einstelleinheit 57 einen Ein/Aus-Schalter 62 auf, mit dem die Stromzufuhr zu der Regeleinrichtung 2 unterbrochen werden kann. Die Unterbrechung hat zur Folge, daß der Arbeitsdruck auf Null geregelt wird, d. h. daß die Luftdruckleitungen 10, 11, 16, 17 und die Abzweigleitungen 18 bis 25 entlüftet und damit die Reifen 42 bis 49 schnellentlüftet werden können.

Die in Figur 2 dargestellte Pneumatikschaltung erläutert den näheren Aufbau der Regeleinrichtung 2. Arbeitsdruckspeicher 3 und Steuerdruckspeicher 4 sind hier getrennt dargestellt und über Zuführleitungen 63, 64 mit dem Kompressor 65 verbunden. In der Zuführleitung 64 zu dem Steuerdruckspeicher 4 sitzt ein Rückschlagventil 66, das einen Rückfluß der Druckluft zum Kompressor 65 verhindert und hierdurch den Luftdruck im Steuerdruckspeicher 4 im wesentlichen konstant hält, und zwar auf 10 bar.

Über die Arbeitsdruckleitung 5 ist der Arbeitsdruckspeicher 3 mit einem Proportionalventil 67 verbunden, das druckluftgesteuert ist und je nach anliegendem Steuerdruck einen bestimmten Arbeitsdruck einstellt. Am Ausgang des Proportionalventils 67 schließt sich eine Arbeitsdruckleitung 68 an, die anschließend in die Luftdruckleitungen 10, 11 verzweigt. An die Arbeitsdruckleitung 68 angeschlossen ist das zusätzliche Manometer 56.

Der Steuerdruck für das Proportionalventil 67 wird mit Hilfe der Einstellknöpfe 53, 54, 55 eingestellt. Die von dem Steuerdruckspeicher 4 ausgehende Steuerdruckleitung 7 teilt sich in der Regeleinrichtung 2 in Zweigleitungen 69, 70, 71 auf, die zu Eingängen an jeweils einem Druckregelventil 72, 73, 74 gehen. Hierbei handelt es sich um Präzisionsventile, die mit Hilfe von Einstelleinrichtungen 75, 76, 77 die Verbindung zu einem der Einstellknöpfe 53, 54, 55 haben, auf die Steuerdrücke p1, p2 bzw. p3 eingestellt sind. Von authorisierten Personen kann die Einstellung der Einstelleinrichtungen 75, 76, 77 mit Hilfe der Einstellknöpfe 53, 54, 55 auf den jeweils gewünschten Steuerdruck eingestellt werden, was an dem Manometer 56 abgelesen werden kann.

Die Zweigleitungen 69, 70, 71 setzen sich anschließend fort und gehen zu 3/2-Wegeventilen 78, 79, 80. Sie nehmen hier sämtlich einen geschlossenen Zustand ein. Über elektrische Eingänge 81, 82, 83 und denen zugeordnete Relais können die 3/2-Wegeventile 78, 79, 80 alternativ in Offenstellung gebracht werden. Die Eingänge 81, 82, 83 sind über das Steuerkabel 58 mit jeweils einem der Betätigungsknöpfe 59, 60, 61 verbunden. Dabei ist die elektrische Schaltung so ausgebildet, daß durch Betätigung eines der Betätigungsknöpfe 59, 60, 61 nur jeweils ein einziges 3/2-Wegeventil 78, 79, 80 in Offenstellung gebracht werden kann, d. h. die anderen schließen automatisch, wenn ein bestimmtes 3/2-Wegeventil 78, 79, 80 angesteuert wird.

Die beiden oberen Zweigleitungen 69, 70 gehen von den 3/2-Wegeventilen 78, 79 zu einem ersten ODER-Glied 84, während die untere Zweigleitung 71 zu einem zweiten ODER-Glied 85 geführt ist. Das zweite ODER-Glied 85 hat auch einen Eingang für die von dem ersten ODER-Glied 84 kommende Ausgangsleitung 86. Von dem zweiten ODER-Glied 85 führt eine Steuerleitung 87 zu dein Proportionalventil 67.

Die Figur 2 zeigt die 3/2-Wegeventile 78, 79, 80 sämtlich in geschlossenen Stellungen. Diese Stellungen ergeben sich, wenn der Ein/Aus-Schalter 62 auf 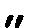 Aus" betätigt ist. In diesem Fall liegt an dem Proportionalventil 67 kein Steuerdruck an, so daß es auf den Arbeitsdruck Null regelt, d. h. auch die Reifen 42 bis 49 werden gegen Null bar belüftet und verlieren deshalb schnell an Luftdruck. Wird nun der Ein/Aus-Schalter 62 auf 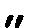 Ein" geschaltet und über die Einstelleinheit 57 beispielsweise der Betätigungsknopf 61 gedrückt oder verdreht, gelangt ein Steuersignal zu dem damit verbundenen 3/2-Wegeventil 80 mit der Folge, daß dies in Offenstellung schaltet, so daß der an dem 3/2-Wegeventil 80 anliegende Steuerdruck p3 über das zweite ODER-Glied 85 zu dem Proportionalventil 67 gelangt und dies so beeinflußt, daß ein dem Steuerdruck p3 entsprechender Arbeitsdruck eingeregelt wird. Soll ein anderer Arbeitsdruck eingestellt werden, kann der Betätigungsknopf 60 betätigt werden, der auf das 3/2-Wegeventil 79 einwirken, oder der Betätigungsknopf 59, der mit dem 3/2-Wegeventil 78 verbunden ist. Wie zu erkennen, verhindern die ODER-Glieder 84, 85 durch entsprechende Sperrung, daß Steuerluft über die 3/2-Wege-ventile 78, 79, 80 austritt.

Es versteht sich, daß die 3/2-Wegeventile 78, 79, 80 auch pneumatisch betätigt werden können, wenn eine entsprechende pneumatische Schaltung zwischen diesen und den Betätigungsknöpfen 59, 60, 61 vorgesehen wird.

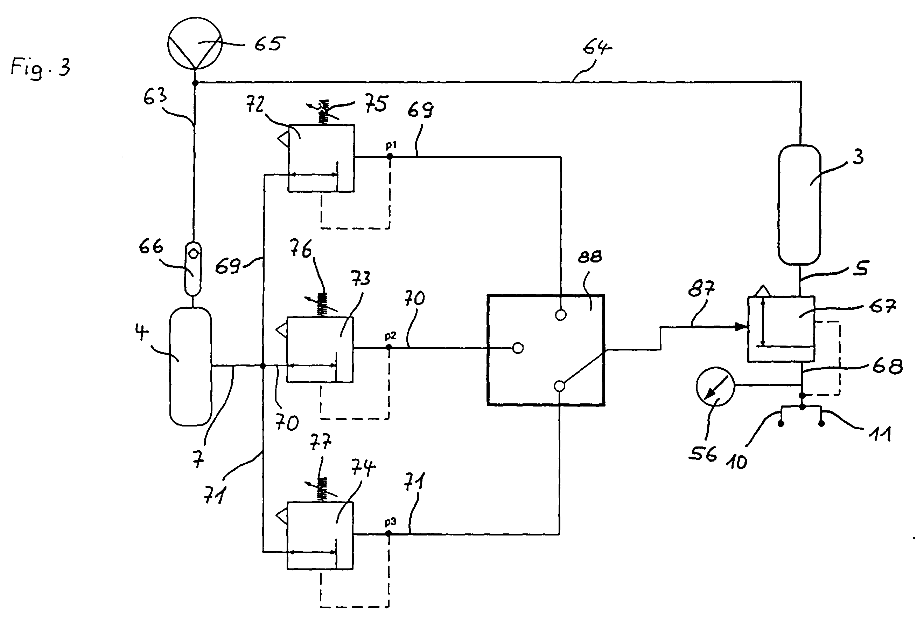

Das in Figur 3 dargestellte Ausführungsbeispiel stimmt mit dem in Figur 2 weitgehend überein, weshalb für die übereinstimmenden Teile die gleichen Bezugsziffern wie in Figur 2 verwendet worden sind. Zur Beschreibung der mit diesen Bezugsziffern versehenen Teile wird auf die Beschreibung der Figur 2 Bezug genommen.

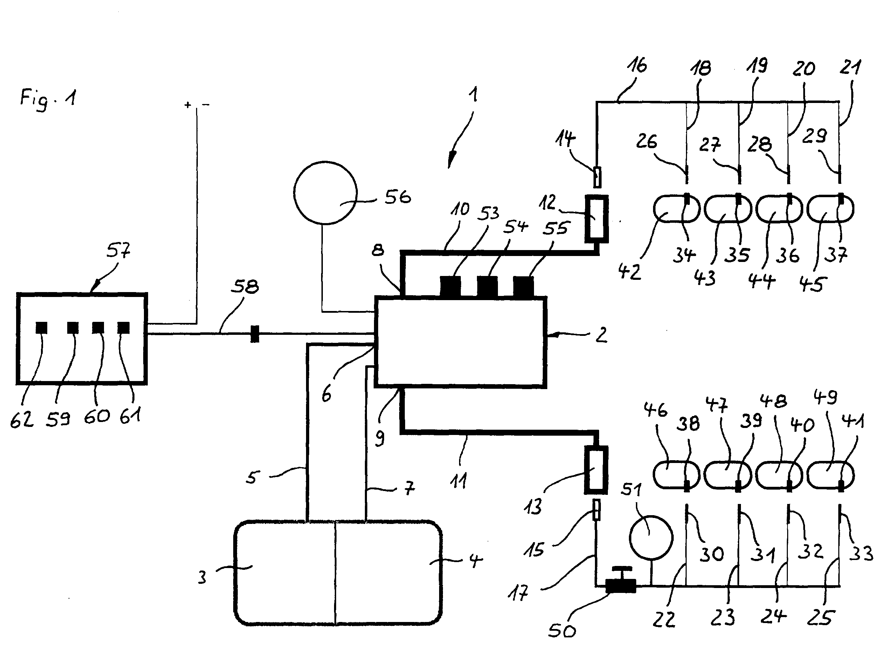

Figur 3 weicht insoweit ab, als die 3/2-Wegeventile 78, 79, 80 und die ODER-Glieder 84, 85 einschließlich der Ausgangsleitung 86 ersetzt worden sind durch ein pneumatisches Mehrwegeventil 88, über das die Steuerleitung 87 mit einer der drei Zweigleitungen 69, 70, 71 verbindbar ist. Das Mehrwegeventil 88 wird über einen hier nicht näher dargestellten Drehschalter betätigt. Der Drehschalter ist zusammen mit dem Mehrwegeventil 88 in der Einstelleinheit 57 eingebaut, und zwar statt der Betätigungsknöpfe 59, 60, 61 gemäß dem in den Figuren 1 und 2 dargestellten Ausführungsbeispiel.

## Patentansprüche

1. Gerät (1) zum Entlüften und/oder Befüllen von Reifen (42-49) an insbesondere geländegängigen Fahrzeugen mit einer Regeleinrichtung (2), die einen an eine Druckluftquelle (65) anschließbaren Lufteingang (6) und wenigstens einen Luftausgang (8, 9) aufweist, der über Luftdruckleitungen (10, 11, 16, 17, 18-25) verbindbar ist, wobei die Regeleinrichtung (2) ein Regelorgan (67) aufweist, über das ein bestimmter Arbeitsdruck in den Luftdruckleitungen (10, 11, 16, 17, 18-25) nach Anschluß an den Reifen (42-49) einregelbar ist, wobei das Regelorgan (67) mit einer handbetätigbaren Einstelleinrichtung (57) verbunden ist, über die unterschiedliche Arbeitsdrücke einstellbar sind, **dadurch gekennzeichnet**, daß die Einstelleinrichtung (57) wenigstens zwei handbetätigbare Schaltorgane (59, 60, 61) aufweist, durch deren Betätigung das Regelorgan (67) jeweils auf einen dem Schaltorgan (59, 60, 61) zugeordneten Arbeitsdruck einstellbar ist.

2. Gerät nach Anspruch 1, **dadurch gekennzeichnet**, daß die Schaltorgane (59, 60, 61) als Zweipunktschalter ausgebildet sind.

3. Gerät (1) zum Entlüften und/oder Befüllen von Reifen (42 bis 49) an insbesondere geländegängigen Fahrzeugen mit einer Regeleinrichtung (2), die einen an eine Druckluftquelle (65) anschließbaren Lufteingang (6) und wenigstens einen Luftausgang (8, 9) aufweist, der über Luftdruckleitungen (10, 11, 16, 17, 18 bis 25) verbindbar ist, wobei die Regeleinrichtung (2) ein Regelorgan (67) aufweist, über das ein bestimmter Arbeitsdruck in den Luftdruckleitungen (10, 11, 16, 17, 18 bis 25) nach Anschluß an den Reifen (42 bis 49) einregelbar ist, wobei das Regelorgan (67) mit einer handbetätigbaren Einstelleinrichtung (88) verbunden ist, über die unterschiedliche Arbeitsdrücke einstellbar sind, **dadurch gekennzeichnet**, daß die Einstelleinrichtung ein Stufenschaltorgan (88) mit wenigstens zwei Schaltstellungen aufweist, durch dessen Betätigung das Regelorgan (67) auf einen der Schaltstellung zugeordneten Arbeitsdruck einstellbar ist.

4. Gerät nach Anspruch 3, **dadurch gekennzeichnet**, daß das Stufenschaltorgan (88) als Drehschalter oder Schiebeschalter ausgebildet ist.

5. Gerät nach Anspruch 3 oder 4, **dadurch gekennzeichnet**, daß das Stufenschaltorgan mit einem pneumatischen Mehrwegventil (88) verbunden ist.

6. Gerät nach einem der Ansprüche 1 bis 5, **dadurch gekennzeichnet**, daß die Schaltorgane (59, 60, 61) bzw. das Stufenschaltorgan (88) an einer von der Regeleinrichtung (2) getrennten Einstelleinheit (57) angeordnet sind bzw. ist, die über eine Steuerleitung (58) mit der Regeleinrichtung (2) verbunden ist.

7. Gerät nach einem der Ansprüche 1 bis 6, **dadurch gekennzeichnet**, daß ein Einstellelement (62) vorhanden ist, über das ein Arbeitsdruck Null einstellbar ist.

8. Gerät nach Anspruch 7, **dadurch gekennzeichnet**, daß die Einstelleinrichtung derart ausgebildet ist, daß bei Ausschalten der Einstelleinrichtung durch das Einstellelement (62) das Regelorgan (67) automatisch auf den Arbeitsdruck Null gestellt wird.

9. Gerät nach einem der Ansprüche 1 bis 8, **dadurch gekennzeichnet**, daß das Regelorgan (67) pneumatisch einstellbar ist und die Einstelleinrichtung eine pneumatische Schaltung aufweist, in der jedem Schaltorgan (59, 60, 61) bzw. jeder Schaltstellung ein pneumatisches Druckregelventil (72, 73, 74) zur Regelung eines bestimmten Steuerdrucks für das Regelorgan (67) zugeordnet ist und die Druckregelventile (72, 73, 74) mit einem Luftdruckspeicher (4) verbunden sind.

10. Gerät nach Anspruch 9, **dadurch gekennzeichnet**, daß der Luftdruckspeicher (4) gegenüber der Luftdruckquelle (65) über ein Rückschlagventil (66) gesichert ist.

11. Gerät nach Anspruch 9 oder 10, **dadurch gekennzeichnet**, daß jedem Druckregelventil (72, 73, 74) Schaltventile (78, 79, 80) zugeordnet sind, die mit den Schaltorganen (59, 60, 61) bzw. dem Stufenschaltorgan (88) verbunden sind.

12. Gerät nach einem der Ansprüche 1 bis 11, **dadurch gekennzeichnet**, daß das Regelorgan als Proportionalventil (67) ausgebildet ist.

13. Gerät nach einem der Ansprüche 1 bis 12, **dadurch gekennzeichnet**, daß dem Regelventil (67) ein eigener Druckspeicher (3) zugeordnet ist.

14. Gerät nach einem der Ansprüche 1 bis 13, **dadurch gekennzeichnet**, daß die den Schaltorganen (59, 60, 61) bzw. Schaltstellungen zugeordneten Arbeitsdrücke einstellbar sind.
